# EUROPÄISCHE PATENTSCHRIFT

(11) **EP 2 947 333 B1**
(45) Veröffentlichungstag und Bekanntmachung des Hinweises auf die Patenterteilung: **24.10.2018**
(21) Anmeldenummer: 15168328.1
(22) Anmeldetag: 20.05.2015
(51) Int. Cl.: F16B 2/24, F16B 2/20, F16B 11/00, F16B 21/04, F16B 21/07

(54) **MONTAGESYSTEM**
INSTALLATION SYSTEM
SYSTÈME DE MONTAGE

(30) Priorität: 21.05.2014 DE 202014102388 U
(43) Veröffentlichungstag der Anmeldung: 25.11.2015
(73) Patentinhaber: tesa nie wieder bohren GmbH, 63450 Hanau (DE)
(72) Erfinder: Braun, Frank, 63584 Gründau (DE)
(74) Vertreter: Patentanwälte Gierlich & Pischitzis Partnerschaft mbB

(56) Entgegenhaltungen:
- EP-A1- 0 421 321
- EP-A1- 1 632 161
- EP-A2- 1 036 532
- EP-A2- 1 695 647
- WO-A1-03/036106
- WO-A1-2012/155921
- DE-A1-102009 031 533
- DE-U1- 7 715 957
- DE-U1-202005 015 678
- US-A- 4 802 785
- US-A- 6 053 464

## Beschreibung

Die Erfindung betrifft ein Montagesystem zum Anbringen von Gegenständen, insbesondere von Accessoires - wie Handtuchhalter, Regale, Leuchten oder dergleichen Artikel - an eine Montagefläche gemäß dem Oberbegriff des Anspruches 1.

Aus dem Stand der Technik sind eine Vielzahl von Montagesystemen bekannt, die Accessoires, wie Handtuchhalter, Regale, Leuchten, Halterungen für Haartrockner und Zahnputzbecher mit glatten Wänden - wie z.B. gekachelten oder mit Marmor verkleideten Wänden - verbinden.

In einer Ausführung aus dem Stand der Technik werden hierbei Grundelemente (Sockelelemente) der Accessoires mit der Wand verbohrt und verschraubt. Dieses hat den Nachteil, dass nach dem Entfernen der Accessoires die zurückbleibenden Bohrlöcher die Wandoberfläche ästhetisch verunstalten.

In einer anderen Ausführung im Stand der Technik werden Grundelemente mittels einer doppelseitig klebenden Unterlage an der Wand verklebt. Diese Lösung hat den Nachteil, dass die Haltekraft entweder von Anfang an gering ist oder im Laufe der Zeit nachlässt.

Aber auch die Verbindung zwischen dem Grundelement mit dem eigentlichen Accessoire ist häufig von geringer Haltbarkeit oder einer umständlichen Montage gekennzeichnet. Bekannte Verbindungen zwischen Grundelement und Accessoire werden in EP 1 036 532 sowie EP 1 632 161 offenbart.

Es ist deshalb Aufgabe der Erfindung, ein Montagesystem zum Anbringen von Gegenständen, insbesondere von Accessoires, wie Handtuchhalter, Regale, Leuchten oder dergleichen Artikel, an eine Montagefläche bereitzustellen, welches die Nachteile aus dem Stand der Technik zumindest teilweise reduziert.

Die Aufgabe wird erfindungsgemäß mit einem Montagesystem zum Anbringen von Gegenständen, insbesondere von Accessoires, wie Handtuchhalter, Regale, Leuchten oder dergleichen Artikel, an eine Montagefläche mit den Merkmalen der Ansprüche 1 und 5 gelöst. Die folgenden Ansprüche 2 bis 4 und 6 offenbaren mögliche Ausführungsvarianten der Erfindung.

Gemäß der Erfindung wird bei diesem Montagesystem die Anordnung eines Adapters zwischen dem Grundelement und dem Accessoire vorgeschlagen, welcher mittels einer Klemmvorrichtung wirkt sowie
derart geformt/gestaltet und positioniert ist, dass beim Anbringen oder Lösen der Accessoires keine Beschädigungen an den Adapterteilen erzeugt werden. Diese, also die Beschädigungen, sind z.B. im Stand der Technik der Fall, wo beispielsweise eine Schraube auf das komplementäre Adapterteil gepresst wird.

Die erfindungsgemäße Klemmvorrichtung kann derart gestaltet werden, dass die Befestigungskräfte nicht zu hoch sind, so dass eine schnelle Montage ohne Werkzeug möglich ist. Ferner hat das erfindungsgemäße Montagesystem nebst der Verwendung der neuartigen Klemmvorrichtung den Vorteil, dass keine Werkzeuge die Oberfläche des Teils (Accessoires) beschädigen können.

Unter dem im Rahmen der vorliegenden Erfindung verwendeten Begriff Montagefläche sind nicht nur Wände im Wohn- und Nasszellenbereich zu verstehen, sondern auch Außenwände, Fussböden oder Decken. Auch muss diese Montagefläche nicht mit einer glatten Oberfläche versehen sein, wie z.B. mit Kacheln oder im Wesentlichen glatten Natursteinoberflächen. An Decken können z.B. Lampen, auf Fußböden z.B. Türstopper und an Küchen Küchenrelinge montiert werden.

Zunächst ist bei diesem Montagesystem zum Anbringen von Gegenständen, insbesondere von Accessoires, wie Handtuchhalter, Regale, Leuchten oder dergleichen Artikel, an eine Montagefläche mittels einem Grundelement, welches direkt an der Montagefläche angeordnet ist, nach der Erfindung grundsätzlich vorgesehen, dass auf der Seite des Grundelementes, die der Montagefläche abgewandt ist, ein mindestens zweiteiliger Adapter angeordnet ist, mittels welchem ein Accessoire mittels der Klemmkraft mit dem Grundelement direkt oder indirekt verbindbar ist. .

Erfindungsgemäß ist zwischen dem Adapter und dem Accessoire eine Rosette anordenbar, mittels welcher der Adapter mit dem Accessoire verbindbar ist. Vorteilhaft deckt die Rosette den Adapter und das Grundelement ab. Vorteilhaft ist das Accessoire an der sichtbaren Außenseite der Rosette angebracht. Die Rosette ist nach einer weiteren Ausführungsform vorteilhaft Bestandteil des mehrteiligen Adapters.

Bei dem Montagesystem ist nach einer anderen Ausführungsvariante das Grundelement mittels Kleben an der Montagefläche angebracht, vorzugsweise ist zwischen dem Grundelement und der Montagefläche zudem ein Klebering angeordnet und der Kleber benetzt im Bereich der inneren, freien Fläche des Kleberinges die Montagefläche und wenigstens einen Abschnitt des Grundelements, welcher vorzugsweise diffusionsoffen, vorzugweise porös ist.

Ausführungsvarianten des erfindungsgemäßen Montagesystems bestehen darin,
- dass der Adapter aus einem Federelement und einer Platte besteht, wobei das Federelement in Schlitze der Platte eingreift, vorteilhaft sind zum Öffnen des Adapters die Platte und das Federelement relativ zueinander verschiebbar angeordnet;
- dass der Adapter im Wesentlichen aus zwei ineinander greifenden Konen besteht, wobei der eine einen Außenkonus und der andere einen Innenkonus darstellt und über einen Mechanismus miteinander verklemmt werden.

Weitere nicht beanspruchte Varianten von Montagesystemen bestehen darin,
- dass der Adapter von genuteten Teilen und in die Nuten eingreifende Leisten gebildet wird, vorteilhaft besteht der Adapter aus zwei einseitig genuteten Teilen, aus einem beidseitig genuteten Teil und einer verschiebbaren und selbsthemmend klemmbaren Gabel, welche derart angeordnet sind, dass durch Bewegung der Gabel die Klemmverbindung hergestellt wird;
- dass der Adapter aus einem genuteten Teil, aus Führungselementen und mindestens einer quer zum genuteten Teil federbelasteten Leiste gebildet wird;
- dass der Adapter aus einer im Wesentlichen teilweise geschlitzten Federglocke besteht, wodurch Federzungen entstehen, wobei an deren freien Enden Rastelemente angeordnet sind, die im klemmenden Zustand in eine Rille eingreifen oder auf einen Absatz aufgreifen, wobei der nicht geschlitzte Bereich der Federglocke mit einem bistabilen Knackfrosch-Mechanismus versehen ist;
- dass der Adapter aus einer im Wesentlichen geschlitzten Federglocke besteht, wodurch Federzungen entstehen, wobei beim Zusammenfügen der Adapterteile durch einen bistabilen Knackfrosch-Mechanismus sich die freien Federzungen an ein Druckelement anlegen, wodurch eine Klemmverbindung hergestellt ist;
- dass der Adapter mittels mindestens je einer ineinander greifenden und klemmenden Wulst und Rille realisiert wird; oder,
- dass der Adapter im Wesentlichen aus einer leicht konischen Tellerfeder und einen auf die Tellerfeder einwirkenden Mechanismus besteht, wobei beim Betätigen des Mechanismus die Tellerfeder leicht flach gedrückt wird und sich die Federbeine der Tellerfeder am Innendurchmesser der Rosette verklemmen.

Ein weiterer Aspekt der Erfindung ist die Verwendung eines Montagesystems nach mindestens einer der Ausführungsvarianten als Kupplung zwischen Bauteilen zur Aufnahme oder Übertragung von statischen Kräften oder von Drehmomenten.

Das erfindungsgemäße Montagesystem stellt ein Zusammenwirken von Vorrichtungs-Elementen dar, wobei sich auch vorteilhafte Verfahrens-Funktionen ergeben.
Die Erfindung wird anhand von schematisch in Zeichnungen gezeigten, die Erfindung jedoch nicht einschränkenden, Ausführungsbeispielen näher und in weiteren Details erläutert. Es zeigen:
- Fig. 1a - c: ein erfindungsgemäßes Montagesystem mit einem Adapter, der aus einem Federelement und einer beweglichen Platte besteht;
- Fig. 2a - b: ein nicht beanspruchtes Montagesystem mit einem Adapter, der aus genuteten Teilen besteht, die durch eine Gabel geklemmt werden;
- Fig. 3a - b: ein nicht beanspruchtes Montagesystem mit einem Adapter, der aus einem genuteten und mindestens einem rastenden Teil besteht;
- Fig. 4a - b: ein nicht beanspruchtes Montagesystem mit einem Adapter, der aus einer Federglocke mit Federzungen und Klemm- und Rastmöglichkeiten besteht;
- Fig. 5a - b: ein nicht beanspruchtes Montagesystem mit einem Adapter, der aus einer Federglocke mit Federzungen besteht, die in einem Konus klemmen;
- Fig. 6a - b: ein erfindungsgemäßes Montagesystem mit einem Adapter mit zwei Konen, die aufeinander gepresst werden;
- Fig. 6c: eine Ausgestaltung des Adapters nach den Figuren 6a, 6b;
- Fig. 7a - b: ein nicht beanspruchtes Montagesystem mit einem Adapter, der mittels einer Tellerfeder in der Rosette klemmt.

Der Beschreibung der Ausführungsbeispiele wird vorausgeschickt, dass alle in den Figuren dargestellten Proportionen frei gewählt wurden und in der tatsächlichen Ausführung in der Praxis andere Maße/Beträge aufweisen können. Ferner wird angemerkt, dass Worte wie "links", "rechts", "oben" und "unten" sich nur auf die Darstelllung in den Figuren beziehen und sich von der tatsächlichen Einbaulage unterscheiden können.

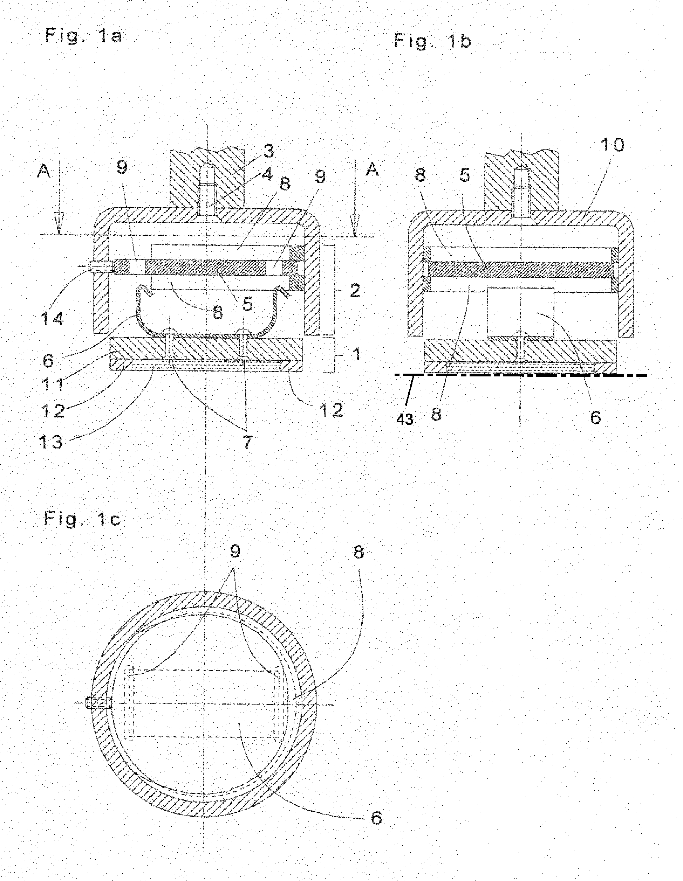

In den Figuren 1a bis c ist eine Ausführungsvariante des Adapters des erfindungsgemäßen Montagesystems zu sehen, der noch nicht zusammen gesteckt wurde. Ein Grundelement 1 ist hier beispielhaft über Niete 7 mit einem Federelement 6 verbunden, wobei die nach oben ragenden Federenden mit je einem Haken versehen sind. Das Grundelement 1 selbst ist hier bereits an einer Montagefläche 43 angeordnet/befestigt, und zwar geklebt 12, 13; hierzu Figur 1b.

Innerhalb einer Rosette 10 sind zwei Klemmringe 8 angeordnet, die auch Bestandteil einer beispielsweise gegossenen Rosette 10 sein können, zwischen denen eine quer verschiebbare, aber leicht klemmende Platte 5 angeordnet ist. In der Platte 5 sind Schlitze 9 angebracht, in die beim Zusammenfügen des Adapters 2 die Haken des Federelementes 6 eingreifen und auf der Oberseite der Platte klemmen. Im Rahmen der Erfindung können die Klemmringe 8 in der Rosette 10 sowohl eingeklebt, als auch eingepresst sein. Am oberen Ende der Rosette 10 ist ein befestigtes Accessoire 3 angedeutet, welches beispielhaft über eine Schraube 4 mit der Rosette 10 verbunden ist. Die Verbindung des Accessoires 3 mit der Rosette 10 kann natürlich dann entfallen, wenn beide Teile ein einziges, gemeinsames Bauteil darstellen. Es sei hier auch angemerkt, dass die Rosette - wie man auf Grund der Fig. 1c annehmen möchte - erfindungsgemäß nicht zwingenderweise rund sein muss. Sie kann in den Ausführungsbeispielen sowohl quadratisch, rechteckig, oval oder auch eine sonstige Querschnittsform aufweisen.

In einer weiteren Ausgestaltung der Erfindung kann die Schraube 4 - anstatt auf die Platte 5 zu wirken - auch auf das Federelement 6 wirken, so dass dann ebenfalls eine relative Verschiebung des Federelementes 6 zur Platte 5 zustande kommt.

In der Ausführung nach den Figuren 1a bis 1c umgreift die Rosette 10 das Grundelement 1, so dass die Rosette 10 quer zur Montagerichtung des Adapters 2 nicht verschiebbar ist. Die hier vorliegende Erfindung ist nicht auf diese Ausgestaltung beschränkt.

Das Grundelement 1 ist in der hier vorliegenden Anmeldung immer mit einer porösen Scheibe 11 (vorzugsweise Sintermetall), einem Klebering 12 und einem in der freien Fläche des Kleberinges 12 angeordneten Kleber 13 gezeichnet. Diese Ausgestaltung des Grundelementes 1 ist besonders vorteilhaft und ist unter anderem durch die Schrift DE 101 52 052 A1 veröffentlicht. Bei dieser Ausgestaltung wird zunächst der Klebering 12 oder die poröse Scheibe 11 zusammen mit dem Klebering 12 an einer, in Figur 1b beispielhaft angedeuteten, Montagefläche 43 aufgeklebt. Durch eine hier nicht dargestellte mindestens eine Öffnung in der porösen Scheibe 11 wird der Kleber 13 in den Zwischenraum zwischen Montagefläche, Klebering 12 und der porösen Scheibe 11 eingebracht. Diese Anordnung hat den Vorteil, dass durch die große Fläche der porösen Scheibe 11 die benötigte Luftfeuchtigkeit einströmen kann und dadurch der Kleber schnell abbindet, wodurch die Klebeverbindung schnell eine hohe Belastbarkeit erhält. Bei einem anderen Kleber dient die poröse Scheibe 11 dazu, dass Lösungsmittel dieses Klebers schnell entweichen können. Für die hier vorliegende Erfindung ist es aber nicht zwingend erforderlich, dass das oben beschriebene, geklebte Grundelement 1 verwendet wird, es kann auch ein Grundelement verwendet werden, welches in herkömmlicher Weise mittels Schrauben, Bohrlöchern und Dübel an der Montagefläche 43 angebracht wird.

Zum Öffnen des Adapters 2 gemäß den Figuren 1 wird die Madenschraube 14 in das Innere der Rosette 10 hineingedreht. Dadurch liegen die Haken des Federelementes 6 nicht mehr auf der Oberseite der Platte 5 auf und die Rosette 10 kann abgezogen werden. Dieses Abstreifen der Haken - zumindest des rechten Hakens - wird sogar noch durch den linken Rand des oberen Klemmringes 8 unterstützt. Auch könnte durch ein Gewinde und eine lagefixierte Madenschraube die Platte 5 hin- und herbewegt werden. Anstelle einer Madenschraube 14 kann die Platte 5 auch mit einem Werkzeug - beispielsweise mit einem Schraubendreher - verschoben werden.

Soll der Adapter wieder "aktiviert" werden, so genügt es, wenn die Platte 5 wieder in die, in der in Figur 1a gezeigten, Position gebracht wird. Zur Erläuterung soll noch erwähnt sein, dass die Figur 1c den Schnitt A-A aus der Figur 1a zeigt.

Ebenso ist es denkbar, dass die Madenschraube 14 die Platte 5 in den Spalt zwischen den beiden Klemmringen 8 presst und ein Verdrehen verhindert. Eine nicht korrekt gedrehte Montage kann dann durch Lösen der Madenschraube 14 korrigiert werden. Das Lösen dieser Verbindung erfolgt ebenso durch Lösen der Madenschraube 14 und Verschieben der Rosette 10, wodurch die Platte 5 aus dem Spalt, welcher zwischen zwei Klemmringen 8 gebildet ist, geschoben wird.

Eine weitere Ausführungsvariante ist, dass in der Rosette 10 ein Topf, der die Platte 5 beinhaltet, durch eine Madenschraube 14 gehalten wird. Diese Madenschraube 14 wird nur gelöst, wenn das Accessoire 3 wieder von der Montagefläche 43 gelöst werden soll. Anschließend kann man durch besseren Zugriff die Rosette 10 samt Platte 5 von den Haken lösen.
Es wird in der hier vorliegenden Anmeldung besonders hervorgehoben, dass für das Funktionieren des erfindungsgemäßen Adapters 2, das Federelement 6 nicht zwangsläufig an dem Grundelement 1 und die Platte 5 nicht zwangsläufig in der Rosette 10 angebracht sein muss, sondern dass das Federelement 6 auch in der Rosette 10 und die Platte 5 am Grundelement 1 angebracht sein kann.
Dieses Vertauschen der Adapterkomponenten gilt auch für die anderen zu dieser Erfindung dargestellten Adapterausgestaltungen. Deshalb wurde in den Ansprüchen auf die räumliche Zuordnung der Adapterkomponenten zum Grundelement 1 oder der Rosette 10 verzichtet.

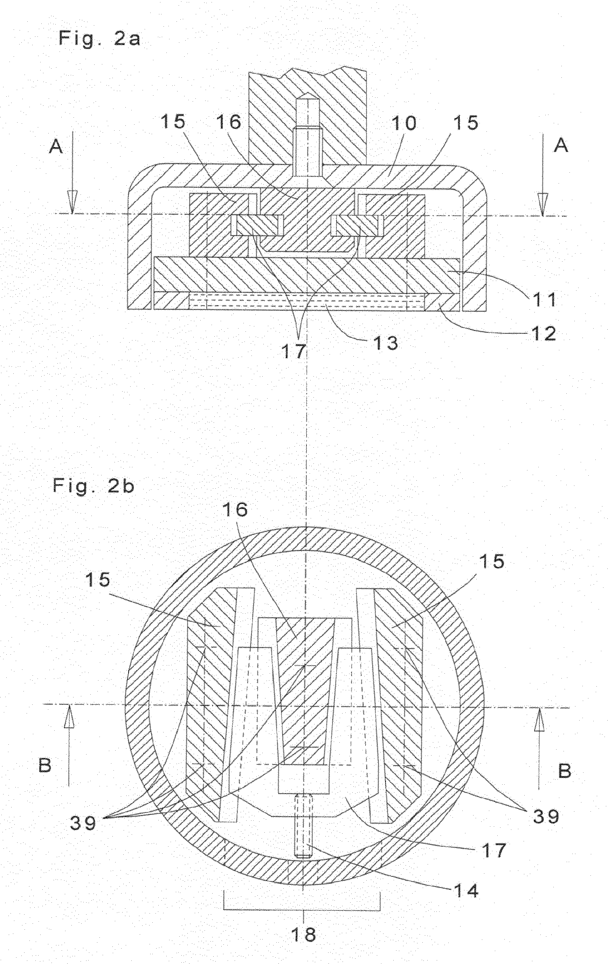

In der Figur 2 wird eine nicht beanspruchte Variante eines Adapters 2 gezeigt, der mittels einseitig genuteter Teile 15, einem beidseitig genuteten Teil 16 und einer in den Nuten beweglichen Gabel 17 eine Klemmverbindung herstellt. Die in der Figur 2b gezeigten Schrägen der Nute sind derart zu wählen, dass die Gabel 17 selbsthemmend in den Nuten hält, damit ein Herausfallen der Gabel 17 bei einer vertikalen Montage des Montagesystems an einer Montagefläche, nicht geschehen kann. Während die einseitig genuteten Teile 15 mit dem Grundelement 1 verbunden sind, ist das beidseitig genutete Teil 16 mit der Rosette 10 (oder Einbauten in der Rosette) verbunden. Gekreuzte Schnittlinien sollen mögliche Verbindungspunkte andeuten. Zum Lösen der Klemmverbindung der Gabel 17 und damit des Öffnens des Adapters 2, wird die Madenschraube 14 hineingedreht, wobei sie sich am Teil 16 abstützt. Anstelle der Madenschraube 14 kann auch ein "Schnellgewinde" Anwendung finden. Dieses "Schnellgewinde" ist dann eine miniaturisierte Form eines Artillerie-Schraubenverschlusses.

Je nachdem wie die Proportionen der an dem Adapter 2 beteiligten Teile gewählt werden, kann die Gabel 17 bei geöffnetem Adapter 2 vollständig innerhalb der Rosette 10 Platz finden. Für den anderen Fall muss im unteren Bereich der Rosette eine Öffnung 18 vorgesehen werden.

In einer weiteren Ausgestaltung des Adapters nach Fig. 2 werden anstelle der genuteten Teile 15 und 16, je mindestens ein Teil an der Rosette 10 und je mindestens ein Teil an dem Grundelement 1 verwendet. Diese Teile werden dann über einen Kegelstift miteinander verbunden, der quer zur Montagerichtung des Adapters 2 durch beide Teile eingeschoben wird. In einer weiteren Fortbildung wird anstelle eines Kegelstiftes ein im Wesentlichen zylindrischer Stift eingeschoben, der einen Exzenter aufweist. Durch Verdrehen des Stiftes wird dann der Adapter 2 verriegelt.

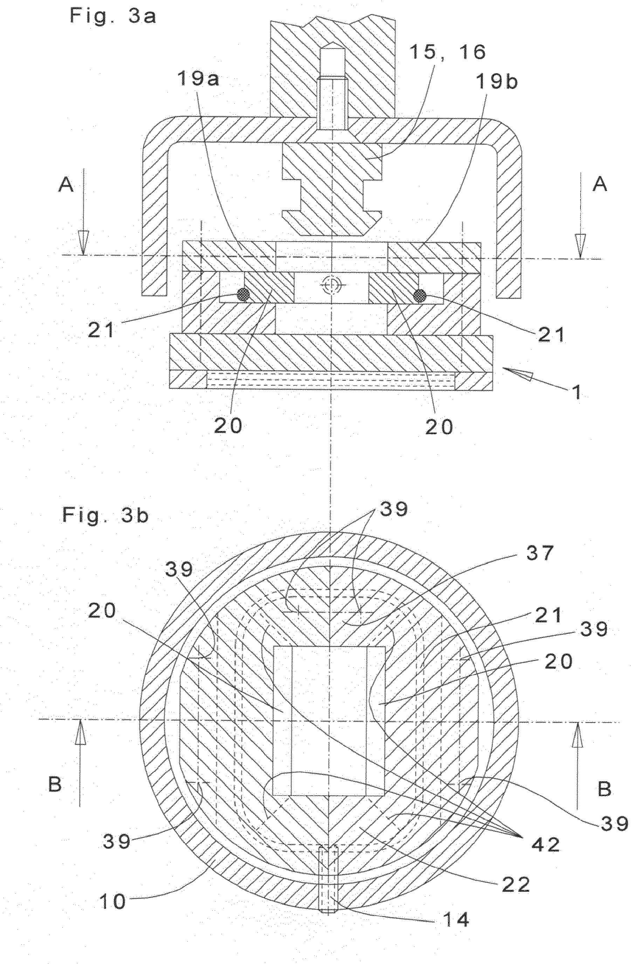

In der Figur 3 ist eine weitere nicht beanspruchte Variante eines Adapters gezeigt, hier ist wiederum ein beidseitig genutetes Teil 16 vorhanden, nur dass es jetzt an Führungselementen 19a, 19b vorbei geführt wird und mit mindestens einer beweglichen Leiste 20 verrastet. Insgesamt sind hier zwei Leisten 20, eine feststehende Leiste 37 und eine Ausrückleiste 22 dargestellt, die an ihren Stoßstellen eine Abschrägung 42 aufweisen und über ein Federelement in Form eines umlaufenden O-Ringes 21 zusammen gepresst werden. Die Bezugszeichen 39 stellen Befestigungspunkte der feststehenden Teile dar.

Soll der Adapter 2 gemäß Ausführung nach der Figur 3 wieder geöffnet werden, so muss die Madenschraube 14 in die Rosette 10 hineingedreht werden. Indem die Madenschraube 14 auf die Ausrückleiste 22 drückt und die feststehende Leiste 37 die Reaktionskräfte aufnimmt, werden die beiden seitlichen Leisten 20 rechts, bzw. links zur Seite gedrückt und das genutete Teil 15,16 kann wieder - zusammen mit der Rosette 10 von Grundelement entfernt werden. Nach dem Zurückdrehen der Madenschraube 14 ist der Adapter 2 wieder für die Aufnahme der Rosette 10 bzw. des genuteten Teiles 15, 16 bereit. Anstelle der Madenschraube 14 kann hier auch wieder ein anderes, stabförmiges Werkzeug - beispielsweise ein Schraubendreher - dienen.

In einer weiteren Ausführung sind die seitlichen Leisten kreisrund auszuführen und das genutete Teil 15,16 in der rechteckigen Form zu belassen. Die Madenschraube 14 würde in eingedrehtem Zustand eine Verdrehung verhindern und könnte bei einer verdrehten Position des Accessoires im montierten Zustand durch Lösen die Verdrehung wieder ermöglichen.

In einer Weiterbildung dieser Ausführung können anstatt eines einzelnen Federelementes auch mehrere Einzelfedern Anwendung finden, die dann auf die Leisten 20 drücken. In einer anderen Weiterbildung dieser Ausführung können statt seitlich ausweichender Leisten 20 auch starre Leisten Anwendung finden, die aber elastisch verformbar sind. Bei Einführen des einseitig oder beidseitig genuteten Teiles 15, 16 federn die Leisten 20 zunächst elastisch zur Seite und rasten danach wieder in die Nute ein.
Zum Öffnen dieses Mechanismus wird wiederum eine Montagehilfe - beispielsweise in Form eines Schraubendrehers oder Stiftes - verwendet, um eine kurzzeitige, seitliche und elastische Verformung der Leisten 20 zu erzeugen.

In einer anderen Weiterbildung geben wiederum nicht die Leisten 20 nach, sondern das einseitig oder zweiseitig genutete Teil 15, 16 ist elastisch nachgiebig.

In einer weiteren Ausführung des Adapters gemäß Figur 3 findet zwar ein beidseitig genutetes Teil 16 Anwendung, aber der Rastmechanismus wird hier mit einer ähnlichen Feder wie in Fig. 1 realisiert. Diese Feder weist dann aber zwei nach innen gewandte Haken auf, die in die Nuten des Teiles 16 einrasten können.

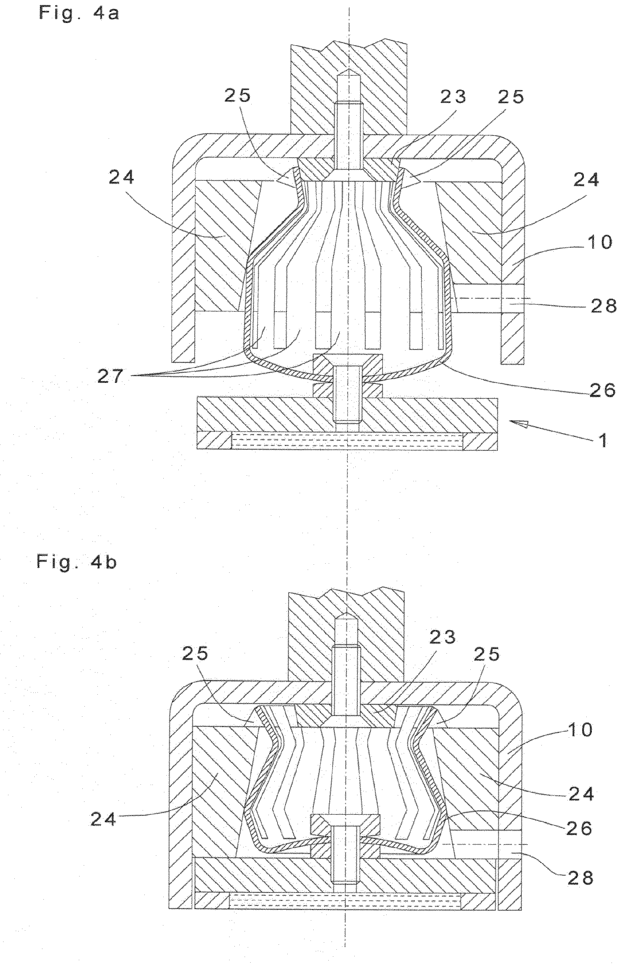

In der Figur 4 wird eine weitere nicht beanspruchte Variante eines Adapters 2 gezeigt. Dieser Adapter 2 wird mittels einer Federglocke 26 realisiert, wobei die Federglocke 26 in ihrem oberen Bereich mehrfach geschlitzt ist, wodurch einzelne Federzungen 27 entstehen. Im oberen Innenbereich der Rosette 10, sozusagen an der Stirnseite der Rosette, ist ein Druckelement 23 - hier als kleiner Konus ausgebildet
- angeordnet, der beim Zusammenfügen der beiden Adapterteile von innen her auf die Federzungen 27 der Federglocke 26 drückt. Ein ebenfalls in der Rosette 10, aber in deren unterem Bereich, angebrachtes Druckelement 24 - hier ebenfalls als Konus ausgebildet
- drückt dann von außen her auf die Federzungen 27. Die Druckelemente 23, 24 können auch als Ring, Halbkugel oder als ein anderer Körper, welcher eine zweckdienliche Form hat, gestaltet sein.

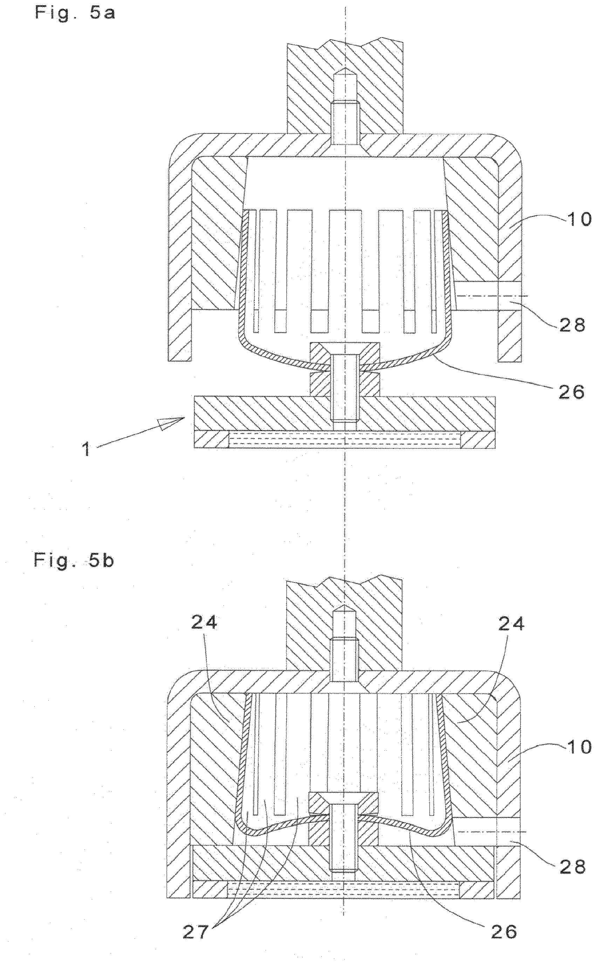

Wird bei der Ausführung nach der Figur 4 nun das obere Teil des Adapters - zusammen mit der Rosette 10 nach unten gedrückt - so wird der untere Bereich der Federglocke 26 elastisch verformt, so dass es zu einem Knackfrosch-Effekt kommt, der hier allerdings bistabil ausgebildet ist. Mit anderen Worten: der untere Teil der Federglocke 26 wölbt sich nach unten und der obere Teil der Federglocke 26 (d.h. die Federzungen 27) wölbt sich nach außen. Dadurch kommen die an den Enden der Federzungen angeordneten Rastelemente 25 -hier als Haken ausgebildet - auf der Oberseite des Druckelementes 24 zu liegen und klemmen die Teileelemente des Adapters 2 zusammen.
Im Rahmen dieser Variante können die Rastelemente 25 auch in eine - hier nicht dargestellte - umlaufende Rille eingreifen. Bistabil bedeutet im Rahmen der Erfindung, dass - im Gegensatz zu dem Spielzeug mit dem Knackfrosch-Effekt - hier beide Stellungen der Federglocke 26 ohne eigenständige Rückstellung sind. Die Drehposition ist hier vor dem Andrücken frei wählbar und wird durch das Andrücken fixiert.
Um den Adapter nach der Figur 4 wieder zu lösen genügt ein stiftförmiges Werkzeug - beispielsweise ein Schraubendreher - das über eine Öffnung 28 in der Rosette 10 und dem Druckelement 24 hineingreift und den Knackfrosch-Effekt zurückstellt.
In der Darstellung in den Figuren 4a und 4b ist die Federglocke 26 jeweils zeichnerisch mittels einer nicht näher bezeichneten Schraube mit dem Grundelement 1 verbunden. Dieses gilt auch für die Figuren 5a und 5b. Diese Schraubverbindung ist aber nur ein Ausführungsbeispiel und kann beispielsweise auch durch eine Rastverbindung realisiert werden.

Bei einer weiteren Ausführung gemäß der Figur 5 wird wiederum der Knackfrosch-Effekt in Verbindung mit einer Federglocke 26 genutzt. In Gegensatz zur Ausführung nach der Fig. 4 dienen hier keine Druckelemente in Form von Haken 25, um beide Teile des Adapters 2 zusammen zu halten.
Wenn in der Fig. 5 das obere Teil des Adapters 2 nach unten gedrückt wird, so stoßen schließlich die Federzungen 27 an der inneren Stirnseite der Rosette 10 an. Im weiteren Verlauf des Zusammendrückens kommt es im unteren Bereich der Federglocke 26 wieder zum Knackfrosch-Effekt, die Federzungen 27 legen sich jetzt an das Druckelement 24 an. Dadurch sind beide Adapterteile miteinander verkeilt. Das Öffnen dieser Adapter-Variante erfolgt wiederum mittels eines Werkzeuges/Hilfsmittels über die Öffnung 28.
Die Drehposition ist auch hier vor dem Andrücken frei wählbar und wird durch das Andrücken fixiert.

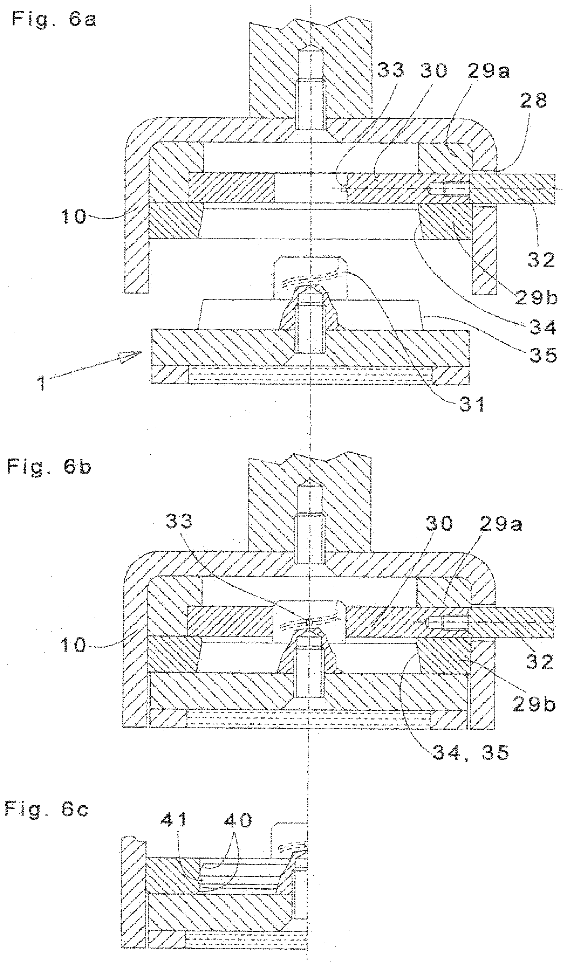

In dem Ausführungsbeispiel der Erfindung gemäß den Figuren 6a, 6b wird der Adapter 2 über zwei Konen 34, 35 realisiert, die selbsthemmend gestaltet sind und die mittels eines Mechanismus aufeinander gepresst werden. Hier handelt es sich beispielhaft um einen Bajonett-Mechanismus. Dieser Bajonett-Mechanismus besteht bei dem erfindungsgemäßen Montagesystem aus einer Nockenscheibe 30, die zwischen zwei Lagerscheiben 29a, 29b drehbar angeordnet ist, und einem Schraubengang 31, der mit dem Grundelement 1 verbunden ist.

Im Zentrum der Nockenscheibe befindet sich eine Bohrung mit mindestens einem Nocken 33. Die Lagerung für die Nockenscheibe 30 muss zweigeteilt und beidseits der Nockenscheibe 30 angeordnet sein, damit zum Einen die Nockenscheibe 30 bei offenem Adapter 2 nicht herausfällt und zum Anderen die Nockenscheibe 30 in ihrer Lagerung montiert werden kann.

Mittels einer Schwenkhilfe 32 - hier als Hebel mit Gewinde gezeichnet - kann die Nockenscheibe 30 über die Öffnung 28 um ihre Drehachse bewegt werden, wobei sich der Nocken 33 in den Schraubengang 31 hineindreht. Anstelle eines Werkzeuges in Form eines Hebels mit einem Gewindeende, kann die Mantelfläche der Nockenscheibe 30 auch mit einer Vielzahl von Einkerbungen oder Zähnen versehen sein. Mit Hilfe eines Werkzeuges/Schraubendrehers kann man über die Öffnung 28 hineingreifen und so das Verdrehen der Nockenscheibe 30 bewerkstelligen. Diese Variante hätte den Vorteil, dass man keinen zusätzlichen Hebel benötigt, der sowieso nur zur Montage und Demontage des Adapters 2 benötigt wird und die Öffnung 28 müsste auch nicht so groß sein, da man keinen nennenswerten Schwenkwinkel benötigt.

Eine weitere Ausführungsvariante ist ein Gewinde in der Nockenscheibe 30 und dem Zapfen, in dem sich der bisher kurze Schraubengang 31 befindet. Um einen nennenswerten Weg der beiden Bajonett-Teile zueinander zu erhalten, müsste man allerdings einen höheren Schwenkwinkel der Nockenscheibe 30 in Kauf nehmen, die dann ja das Gegengewinde beinhaltet.

In der Figur 6c wird eine Variante des Adapters gemäß den Figuren 6a, 6b ausschnittsweise gezeigt. Anstelle zweier Konen 34, 35 verrasten hier zwei Teile miteinander, die eine Wulst bzw. eine Rille 41 aufweisen. An welchem Bauteil sich die Rille und an welchem Bauteil sich die Wulst befindet, ist hierbei nicht von Bedeutung. Damit diese Bauteile besser zusammen gefügt werden, weisen beide je eine Einführschräge 40 auf. Die Klemmkräfte zwischen Wulst und Rille 41 sorgen für einen sicheren Halt der beiden Adapterteile.
In der Ausführung nach den Figuren 6a und 6b sind der Konus 35 und der Schraubengang 31 jeweils zeichnerisch mittels einer nicht näher bezeichneten Schraube mit dem Grundelement 1 verbunden.

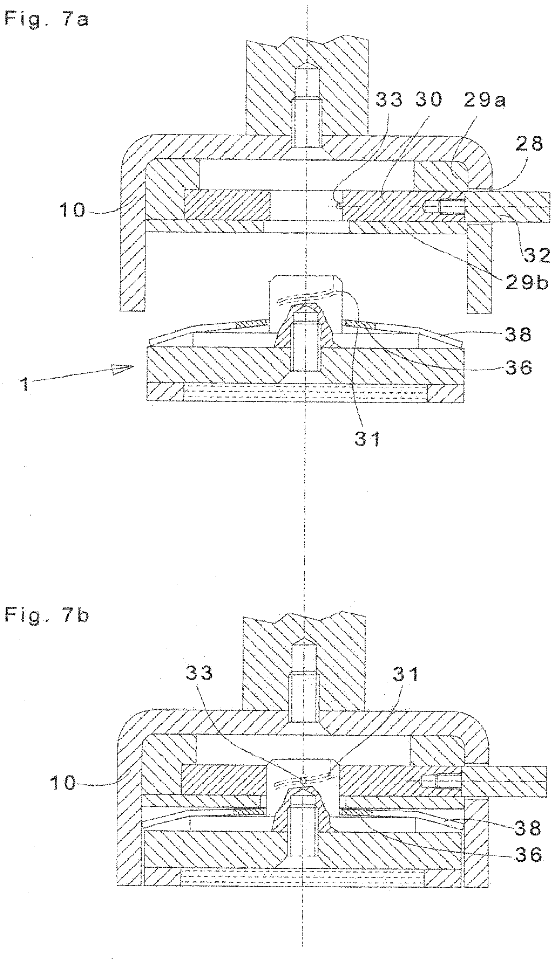

Bei einem weiteren nicht beanspruchten Beispiel gemäß der Figur 7 ist wiederum eine zwischen zwei Lagerungen 29a, 29b zentrierte Nockenscheibe 30 vorhanden, die sich beim Schließen des Adapters 2 auf den am Grundelement 1 angeordneten Schraubengang 31 eindreht. Diese Schraubverbindung ist aber nur ein Ausführungsbeispiel und kann beispielsweise auch durch eine Rast- oder Klebverbindung realisiert werden. Das bezüglich der Schwenkhilfe 32 bei der Beschreibung der Ausführung nach Figur 6 Gesagte gilt auch hier.

Im Gegensatz zu der Ausführung nach der Figur 6 wird hier die Klemmkraft nicht mittels der Konen 34, 35 aufgebaut, sondern mittels einer Tellerfeder 36, die im ungespannten Zustand einen Abstand zum Innendurchmesser der Rosette 10 aufweist. Wird die Nockenscheibe 30 beim Schließen des Adapters 2 jedoch verdreht, so wird die Tellerfeder etwas abgeflacht, wodurch sich der Außendurchmesser der Tellerfeder 36 etwas vergrößert und diese sich an das Innere der Rosette 10 anlegt, wodurch die Klemmkraft aufgebaut wird.
Eine weitere Ausführung wäre ein Gewinde in der Nockenscheibe 30 und dem Zapfen, in dem sich der bisher kurze Schraubengang 31 befindet.

In einer weiteren nicht beanspruchten Ausgestaltung eines Adapters 2 wird sowohl auf das Aufeinanderpressen zweier Konen 34, 35 (Fig. 6) bzw. auf eine Tellerfeder 36 (Fig. 7) verzichtet. Stattdessen wird nur ein Schraubengang 31 verwendet, der mit einem korrespondierenden Teil - beispielsweise in Form eines Nockens 33 - den Adapter 2 bildet.

Das korrespondierende Teil kann aber ebenfalls wieder ein Schraubengang 31 sein. Durch diese Gestaltung ist der Adapter 2 als eine Bajonett-Verbindung realisiert. Ist diese Bajonett-Verbindung dann auch noch großflächiger als die Ausführung gemäß den Figuren 6 und 7, so entsteht dann eine sehr stabile Verbindung, die keiner weiteren Klemmelemente mehr bedarf.

### Bezugszeichenliste

- 1: Grundelement
- 2: Adapter
- 3: Accessoire
- 4: Schraube
- 5: Platte
- 6: Federelement
- 7: Niet
- 8: Klemmring
- 9: Schlitz
- 10: Rosette
- 11: poröse Scheibe (Sintermetall)
- 12: Klebering
- 13: Kleber
- 14: Madenschraube
- 15: einseitig genutetes Teil
- 16: beidseitig genutetes Teil
- 17: Gabel
- 18: Öffnung für Gabel in der Rosette
- 19a, b: Führungselemente
- 20: bewegliche Leiste
- 21: O-Ring
- 22: Ausrückleiste
- 23: Druckelement an der Stirnseite der Rosette
- 24: Druckelement im unteren Bereich der Rosette
- 25: Rastelement
- 26: Federglocke
- 27: Federzunge
- 28: Öffnung für Werkzeug
- 29a, b: Lagerung für Nockenscheibe
- 30: Nockenscheibe
- 31: Schraubengang
- 32: Schwenkhilfe
- 33: Nocken
- 34: Konus in der Rosette
- 35: Konus an dem Grundelement
- 36: Tellerfeder
- 37: feststehende Leiste
- 38: Federbeine der Tellerfeder
- 39: Befestigungspunkte
- 40: Einführschräge
- 41: Wulst und Rille
- 42: Schrägen
- 43: Montagefläche

## Patentansprüche

1. Montagesystem zum Anbringen von Gegenständen, insbesondere von Accessoires, wie Handtuchhalter, Regale, Leuchten oder dergleichen, an eine Montagefläche mit einem Grundelement (1), wobei das Grundelement (1) direkt an der Montagefläche anordenbar ist, und wobei auf der Seite des Grundelementes (1), die der Montagefläche abgewandt ist, ein mindestens zweiteiliger Adapter (2) angeordnet ist, mittels welchem ein Accessoire (3) mittels einer Klemmkraft mit dem Grundelement (1) direkt oder indirekt verbindbar ist,
**dadurch gekennzeichnet, dass**
der Adapter (2) aus einem Federelement (6) und einer Platte (5) besteht, wobei das Federelement (6) in Schlitze (9) der Platte (5) eingreift, wobei
eine Rosette (10) zwischen dem Adapter (2) und dem Accessoire (3) anordenbar ist, mittels welcher der Adapter (2) mit dem Accessoire (3) verbindbar ist.

2. Montagesystem nach Anspruch 1,
**dadurch gekennzeichnet, dass**
die Rosette (10) ein Teileelement des Adapters (2) ist.

3. Montagesystem nach Anspruch 1 oder 2,
**dadurch gekennzeichnet, dass**
das Grundelement (1) mittels Kleben an der Montagefläche anbringbar ist, vorzugsweise ist zwischen dem Grundelement (1) und der Montagefläche ein Klebering (12) angeordnet und der Kleber (13) benetzt im Bereich der inneren, freien Fläche des Kleberinges (12) die Montagefläche und wenigstens einen Abschnitt des Grundelements (1), welcher vorzugsweise diffusionsoffen, vorzugweise porös ist.

4. Montagesystem nach Anspruch 3,
**dadurch gekennzeichnet, dass**
zum Öffnen des Adapters (2) die Platte (5) und das Federelement (6) relativ zueinander verschiebbar angeordnet sind.

5. Montagesystem zum Anbringen von Gegenständen, insbesondere von Accessoires, wie Handtuchhalter, Regale, Leuchten oder dergleichen, an eine Montagefläche mit einem Grundelement (1), wobei das Grundelement (1) direkt an der Montagefläche anordenbar ist, und wobei auf der Seite des Grundelementes (1), die der Montagefläche abgewandt ist, ein mindestens zweiteiliger Adapter (2) angeordnet ist, mittels welchem ein Accessoire (3) mittels einer Klemmkraft mit dem Grundelement (1) direkt oder indirekt verbindbar ist,
**dadurch gekennzeichnet, dass**
der Adapter (2) im Wesentlichen aus zwei ineinander greifenden Konen (34, 35) besteht, wobei der eine einen Außenkonus und der andere einen Innenkonus darstellt und über einen Mechanismus miteinander verklemmt werden, wobei
eine Rosette (10) zwischen dem Adapter (2) und dem Accessoire (3) anordenbar ist, mittels welcher der Adapter (2) mit dem Accessoire (3) verbindbar ist.

6. Montagesystem nach Anspruch 5,
**dadurch gekennzeichnet, dass**
der Adapter (2) mittels mindestens je einer ineinander greifenden und klemmenden Wulst und Rille (41) realisiert wird.

7. Verwendung eines Montagesystems nach mindestens einem der Ansprüche 1 bis 6 als Kupplung zwischen Bauteilen zur Aufnahme oder Übertragung von statischen Kräften oder von Drehmomenten.

## Claims

1. Assembly system for attaching objects, in particular accessories such as hand towel holders, shelves, lights, or the like, to an assembly face, having a base element (1), wherein the base element (1) is disposable directly on the assembly face, and wherein an adapter (2) that is in at least two parts is disposed on that side of the base element (1) that faces away from the assembly face, by means of which adapter (2) an accessory (3) by means of a clamping force is connectable directly or indirectly to the base element (1),
**characterized in that**
the adapter (2) is composed of a spring element (6) and a plate (5), wherein the spring element (6) engages in slots (9) of the plate (5),
wherein a collar (10) by means of which the adapter (2) is connectable to the accessory (3) is disposable between the adapter (2) and the accessory (3).

2. Assembly system according to Claim 1,
**characterized in that**
the collar (10) is a part-element of the adapter (2) .

3. Assembly system according to Claim 1 or 2,
**characterized in that**
the base element (1) is attachable to the assembly face by means of adhesive bonding, an adhesive ring (12) preferably being disposed between the base element (1) and the assembly face, and the adhesive (13) in the region of the internal free face of the adhesive ring (12) wetting the assembly face and at least one portion of the base element (1), said at least one portion of the latter preferably being permeable, preferably porous.

4. Assembly system according to Claim 3,
**characterized in that**
the plate (5) and the spring element (6) for opening the adapter (2) are disposed so as to be mutually displaceable.

5. Assembly system for attaching objects, in particular accessories such as hand towel holders, shelves, lights, or the like, to an assembly face, having a base element (1), wherein the base element (1) is disposable directly on the assembly face, and wherein an adapter (2) that is in at least two parts is disposed on that side of the base element (1) that faces away from the assembly face, by means of which adapter (2) an accessory (3) by means of a clamping force is connectable directly or indirectly to the base element (1),
**characterized in that**
the adapter (2) is composed substantially of two mutually engaging cones (34, 35), wherein one of said cones (34, 35) represents an external cone and the other represents an internal cone, said cones (34, 35) being mutually clamped by way of a mechanism,
wherein a collar (10) by means of which the adapter (2) is connectable to the accessory (3) is disposable between the adapter (2) and the accessory (3).

6. Assembly system according to Claim 5,
**characterized in that**
the adapter (2) is implemented by means of in each case at least one mutually engaging and clamping bead and groove (41).

7. Use of an assembly system according to at least one of Claims 1 to 6 as a coupling between components for absorbing or transmitting static forces or torques.

## Revendications

1. Système de montage pour le montage d'objets, en particulier d'accessoires, tels que des porte-serviettes, des étagères, des lampes ou similaires, sur une surface de montage avec un élément de base (1), l'élément de base (1) pouvant être disposé directement sur la surface de montage, et un adaptateur (2) au moins en deux parties étant disposé du côté de l'élément de base (1) qui est opposé à la surface de montage, au moyen duquel adaptateur un accessoire (3) peut être connecté directement ou indirectement à l'élément de base (1) au moyen d'une force de serrage,
**caractérisé en ce que**
l'adaptateur (2) se compose d'un élément de ressort (6) et d'une plaque (5), l'élément de ressort (6) s'engageant dans des fentes (9) de la plaque (5),
une rosette (10) pouvant être disposée entre l'adaptateur (2) et l'accessoire (3), au moyen de laquelle l'adaptateur (2) peut être connecté à l'accessoire (3).

2. Système de montage selon la revendication 1,
**caractérisé en ce que**
la rosette (10) est un élément partiel de l'adaptateur (2).

3. Système de montage selon la revendication 1 ou 2, **caractérisé en ce que**
l'élément de base (1) peut être monté par collage à la surface de montage, de préférence un cercle de colle (12) est disposé entre l'élément de base (1) et la surface de montage et la colle (13), dans la région de la surface intérieure libre du cercle de colle (12), mouille la surface de montage et au moins une portion de l'élément de base (1) qui est de préférence à diffusion ouverte, de préférence poreuse.

4. Système de montage selon la revendication 3, **caractérisé en ce que**
pour l'ouverture de l'adaptateur (2), la plaque (5) et l'élément de ressort (6) sont disposés de manière déplaçable l'un par rapport à l'autre.

5. Système de montage pour le montage d'objets, en particulier d'accessoires, tels que des porte-serviettes, des étagères, des lampes ou similaires, sur une surface de montage avec un élément de base (1), l'élément de base (1) pouvant être disposé directement sur la surface de montage, et un adaptateur (2) au moins en deux parties étant disposé du côté de l'élément de base (1) qui est opposé à la surface de montage, au moyen duquel adaptateur un accessoire (3) peut être connecté directement ou indirectement à l'élément de base (1) au moyen d'une force de serrage,
**caractérisé en ce que**
l'adaptateur (2) se compose essentiellement de deux cônes s'engageant l'un dans l'autre (34, 35),
l'un constituant un cône externe et l'autre un cône interne, lesquels sont serrés l'un contre l'autre au moyen d'un mécanisme,
une rosette (10) pouvant être disposée entre l'adaptateur (2) et l'accessoire (3), au moyen de laquelle l'adaptateur (2) peut être connecté à l'accessoire (3).

6. Système de montage selon la revendication 5, **caractérisé en ce que**
l'adaptateur (2) est réalisé au moyen d'au moins un bourrelet et une gorge (41) serrés et s'engageant l'un dans l'autre.

7. Utilisation d'un système de montage selon au moins l'une quelconque des revendications 1 à 6 en tant qu'accouplement entre des composants pour recevoir ou transmettre des forces statiques ou des couples.
